# EUROPÄISCHE PATENTSCHRIFT

(11) **EP 3 103 324 B1**
(45) Veröffentlichungstag und Bekanntmachung des Hinweises auf die Patenterteilung: **21.11.2018**
(21) Anmeldenummer: 16168615.9
(22) Anmeldetag: 06.05.2016
(51) Int. Cl.: A01F 15/18

(54) **LANDWIRTSCHAFTICHE RUNDBALLENPRESSE**
AGRICULTURAL ROUND BALER
PRESSE AGRICOLE À BALLES RONDES

(30) Priorität: 11.05.2015 DE 102015208674
(43) Veröffentlichungstag der Anmeldung: 14.12.2016
(73) Patentinhaber: Deere & Company, Moline, IL 61265 (US)
(72) Erfinder: Chapon, Emmanuel, 70100 Velet (FR); Delphigue, Didier, 21000 Dijon (FR)
(74) Vertreter: Reichert, Christian

(56) Entgegenhaltungen:
- EP-A1- 1 466 520
- EP-A1- 1 927 279
- DE-A1- 2 524 434
- DE-A1-102011 006 823

## Beschreibung

Die Erfindung betrifft eine landwirtschaftliche Rundballenpresse mit einer Ballenpresskammer aus mehreren angetriebenen und über einen Umfang der Ballenpresskammer angeordneten Pressrollen durch welche eine rotationserzeugende oder rotationserhaltene Eingriffswirkung auf einen in der Ballenpresskammer befindlichen Rundballen erzeugbar ist, wobei die Ballenpresskammer eine Öffnung aufweist, durch welche der gepresste Rundballen entladen werden kann.

Landwirtschaftliche Rundballenpressen sind bekannt. Dabei wird in Rundballenpressen landwirtschaftliches Erntegut, beispielsweise Stroh, Gras oder Getreide zu einem Rundballen geformt und mit einem Umwicklungsmaterial, beispielsweise Netz, Folie oder Bindegarn, umwickelt. Derartige Rundballenpressen weisen eine Aufnahme- und Zuführeinrichtung für das zu pressende Erntegut auf, durch welche das Erntegut in eine Zuführöffnung einer Ballenpresskammer eingeführt wird. Die Ballenpresskammer umfasst mehrere in einem Kreis angeordnete Pressrollen, die sich über die Breite der Ballenpresskammer zwischen zwei Seitenwänden erstrecken und rotatorisch angetrieben sind.

Die EP 1 466 520 A1 offenbart eine Rundballenpresse für landwirtschaftliche Halmgüter, deren Pressraum umfangsseitig durch antreibbare Presselemente und stirnseitig durch zweigeteilte Seitenwände begrenzt wird. Das Pressraumgehäuse besteht aus einem gestellfesten Vordergehäuse und einem an diesem um eine horizontale Schwenkachse aufklappbar gelagerten Hintergehäuse, wobei der Antrieb der Presselemente von einem im Bereich der Seitenwand des Vordergehäuses angeordneten ersten Verteilergetriebe abgeleitet wird. Aus Sicherheits- und Wartungsgründen wird vorgeschlagen, dass direkt oder indirekt an der Seitenwand des Hintergehäuses wenigstens ein zweites Verteilergetriebe angeordnet ist, über das der Antrieb der Presselemente des Hintergehäuses erfolgt.

Ferner offenbart die DE 10 2011 006823 A1 eine Rundballenpresse mit einer Ballenbildungskammer, die radial durch Ballenbildungsmittel mit einer oder mehreren angetriebenen Walzen umgeben ist, wobei in einem Innenraum der Walzen ein Elektromotor angeordnet ist, der zum Antrieb der Walze eingesetzt wird.

Zur besseren Mitnahme bzw. besseren Beförderung des in die Presskammer eingeführten Ernteguts sind die Pressrollen mit mehreren über den Umfang der Pressrollen verteilte Längsrippen oder Längsstege versehen, die, sich in radiale Richtung erstreckende, Erhebungen darstellen und sich über die Länge der Pressrolle erstecken. Die Rundballenpressen sind in der Regel mit einem zweigeteilten Gehäuse ausgebildet, wobei ein hinterer Teil hochgeklappt wird und eine Austrittsöffnung für einen gepressten Rundballen bildet. Das Öffnen erfolgt am Ende eines Pressvorgangs, wobei es insbesondere wichtig ist, dass der Rundballen bis zuletzt in einer steten Drehbewegung gehalten wird, nicht zuletzt auch um eine Netz- oder Garnbindung abzuschließen. Zum Entladen des Rundballens entsteht beim Öffnen des zweigeteilten Gehäuses ein Öffnungsspalt zwischen einem vorderen und einem hinteren Gehäuseteil, wodurch die Geometrie im Pressraum derart verändert wird, dass die Anordnung der Pressrollen zunehmend von einer Zylinderform abweicht da sich insbesondere der Abstand zwischen den unmittelbar an der Öffnung befindlichen Pressrollen vergrößert und sich die zuvor zylindrisch um den Rundballen angeordneten Pressrollen zunehmend von einer zylindrischen Umfangsfläche wegbewegen. Problematisch wirkt sich dies oftmals darin aus, dass eine rotationserzeugende oder rotationserhaltene Eingriffswirkung der Pressrollen auf den Rundballen zu früh abbrechen kann und der Rundballen nicht ausreichend lang in Rotation gehalten wird. Insbesondere bei trockenem Erntegut kann sich dieses Problem einstellen. Um dieses Problem zu beheben sind Versuche unternommen worden, die Eingriffsstärke der Pressrollen durch einen Zusammenschluss mehrerer Pressrollen mit einem Fördergurtsystem zu erhöhen. Dies kann sich jedoch auch negativ auf die Presseigenschaften bei feuchteren Erntebedingungen auswirken, weshalb spezielle Nachrüstsätze angeboten werden, die ein Nachrüsten des genannten Fördergurtsystems für trockene Erntebedingungen ermöglichen. Dies ist jedoch mit erheblichem Aufwand verbunden.

Die der Erfindung zugrunde liegende Aufgabe wird darin gesehen, eine Pressrolle der eingangs genannten Art anzugeben, durch welche das oben genannte Problem behoben bzw. gemildert wird.

Die Aufgabe wird erfindungsgemäß durch die Lehre des Patentanspruchs 1 gelöst.

Erfindungsgemäß ist eine landwirtschaftliche Rundballenpresse der eingangs genannten Art derart ausgebildet, dass an einer Unterseite der Ballenpresskammer wenigstens eine der unmittelbar rückseitig der Öffnung oder unmittelbar vorderseitig der Öffnung angeordneten Pressrollen mit einer zu den übrigen Pressrollen unterschiedlichen Drehzahl antreibbar ist.

Bei Beginn eines Entladeprozesses für einen fertig gepressten Rundballen, also bei sich öffnendem hinteren Gehäuseteil, wird die an einer Unterseite der Ballenpresskammer unmittelbar rückseitig der Öffnung und/oder unmittelbar vorderseitig der Öffnung angeordnete Pressrolle mit einer höheren Umdrehungszahl betrieben, um insgesamt eine stärkere Eingriffswirkung der betreffenden Pressrollen auf die Rundballenumfangsfläche zu erzeugen bzw. einer durch das Öffnen des hinteren Gehäuseteils hervorgerufenen abnehmenden Eingriffswirkung der übrigen Pressrollen entgegen zu wirken.

Die stärkere Eingriffswirkung, bewirkt eine durch die Pressrollen auf die Rundballenumfangsfläche stärker ausgeübte Mitnahmewirkung, so dass der Rundballen ausreichend lang in Rotation gehalten wird. Auch wenn sich die übrigen Pressrollen zunehmend während des Öffnens des Gehäuses von der Rundballenoberfläche entfernen, können die unterhalb, unmittelbar an der Öffnung gelegenen Pressrollen, die Rotation des Rundballens aufrecht erhalten, da zudem das Gewicht des Rundballens mit zunehmendem Öffnungsspalt der Öffnung auch zunehmend auf den genannten beiden Pressrollen lastet und somit die stärkere Eingriffswirkung der beiden Pressrollen auch stärker zum Tragen kommt. In Folge kann eine durch die übrigen Pressrollen hervorgerufene abnehmende Rotationsantriebswirkung durch die beiden an der Öffnung gelegenen Pressrollen zunehmend kompensiert werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 eine schematische Seitenansicht einer landwirtschaftlichen Rundballenpresse mit Pressrollen und Öffnung zum Entladen eines gepressten Rundballens.
Fig. 2 einen vergrößerten Ausschnitt mit Pressrollen unmittelbar rückseitig und unmittelbar vorderseitig der Öffnung aus Figur 1.

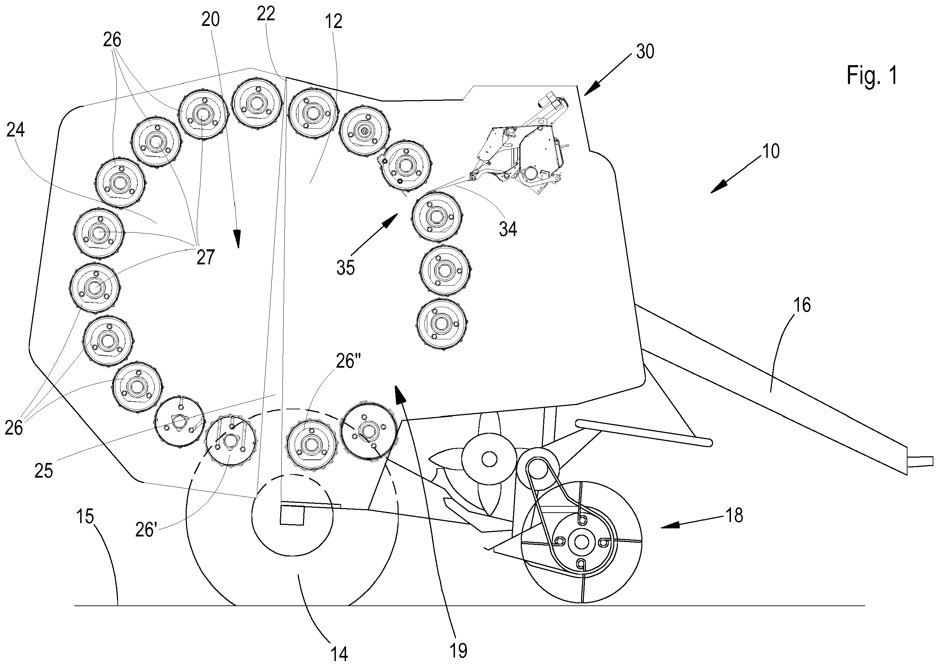

Eine in der Figur 1 schematisch dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper, anschließbar ist.

An einer in Vorwärtsfahrtrichtung vorderen unteren Seite des ersten Gehäuseteils 12 befindet sich in bekannter Weise eine Aufnahme- und Zuführeinrichtung 18 für Erntegut, die geschnittenes Erntegut durch einen Einführkanal 19 in eine Ballenpresskammer 20 fördert, wobei der erste Gehäuseteil 12 einen vorderen Teil der Ballenpresskammer 20 umgibt. An dem rückwärtigen oberen Eckbereich des ersten Gehäuseteils 12 befindet sich ein Lager 22 für ein schwenkbares zweites Gehäuseteil 24, das einen hinteren Teil der Ballenpresskammer 20 umgibt. Das zweite Gehäuseteil 24 gibt im geöffneten Zustand eine Öffnung 25 frei, durch welchen ein von der Rundballenpresse 10 gepresster Ballen (nicht gezeigt) abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt somit eine Auslassklappe für einen in der Ballenpresskammer 20 gepressten Ballen dar.

Die Rundballenpresse 10, mit größenunveränderlicher Ballenpresskammer 20 ausgebildet, enthält eine Vielzahl zueinander parallel verlaufender Pressrollen in Form von Pressrollen 26 (exemplarisch wurden hier nur einige wenige Pressrollen 26 mit dem Bezugszeichen "26" versehen), deren Rollachsen 27 bei geschlossenem zweiten Gehäuseteil 24 auf einem Kreisbogen gelegen sind, und von denen wenigstens einige angetrieben sind. Die Pressrollen 26 dienen, neben einem Pressen und einer Formgebung, insbesondere auch einer Rotationserzeugung oder einer Rotationserhaltung eines in der Presskammer 20 enthaltenen Rundballens (nicht gezeigt). Unmittelbar rückseitig und vorderseitig der Öffnung 25, zum Entladen eines gepressten Ballens, sind Pressrollen 26' und 26" angeordnet, die gegenüber den übrigen Pressrollen 26 eine Beschaffenheit mit einer stärkeren Eingriffswirkung auf den Ballen aufweisen. Die Rundballenpresse 10 ist hier exemplarisch zur Darstellung der Öffnung 25 mit leicht geöffnetem hinterem Gehäuseteil 24 abgebildet. Während eines Pressvorgangs ist dieser jedoch geschlossen.

Ferner umfasst die Rundballenpresse 10 eine Ballenwickeleinrichtung 30, die mit einer Vorratsrolle (nicht gezeigt) für Umwicklungsmaterial bestückt ist. Als Umwicklungsmaterial kann vorzugsweise ein Netz oder auch Folie eingesetzt werden. Die Ballenwickeleinrichtung 30 umfasst eine Zuführeinrichtung 34 für das Umwicklungsmaterial, mittels welcher das Umwicklungsmaterial von der Vorratsrolle durch eine Einführöffnung 35 in die Ballenpresskammer 20 geführt wird.

Nachdem der eigentliche Pressvorgang, also die Erntegutaufnahme und Bildung eines Rundballens durch die Pressrollen 26, 26', 26" abgeschlossen ist, wird eine Fahrt über den Boden 15 unterbrochen, da die Rundballenpresse 10 mit dem Rundballen gefüllt ist und kein weiteres Erntegut mehr in die Ballenpresskammer 20 aufgenommen werden soll bzw. kann. Zu dieser Zeit wird auch die Ballenwickeleinrichtung 30 aktiviert, und ein sich dem Pressvorgang anschließender Umwicklungsvorgang eingeleitet. Dabei wird durch eine anhaltende Drehung des sich in der Ballenpresskammer 20 befindlichen Rundballens das Umwicklungsmaterial um den Rundballen 20 gewickelt. Nachdem ein Umwicklungsvorgang abgeschlossen ist wird der Rundballen mittels Öffnen der Auslassklappe (zweiter Gehäuseteil 24) durch die Öffnung 25 über einer Entladerampe (nicht gezeigt) auf dem Boden 15 abgelassen. Sodann wird die Fahrt mit der Rundballenpresse 10 wieder aufgenommen und ein neuer Pressvorgang beginnt.

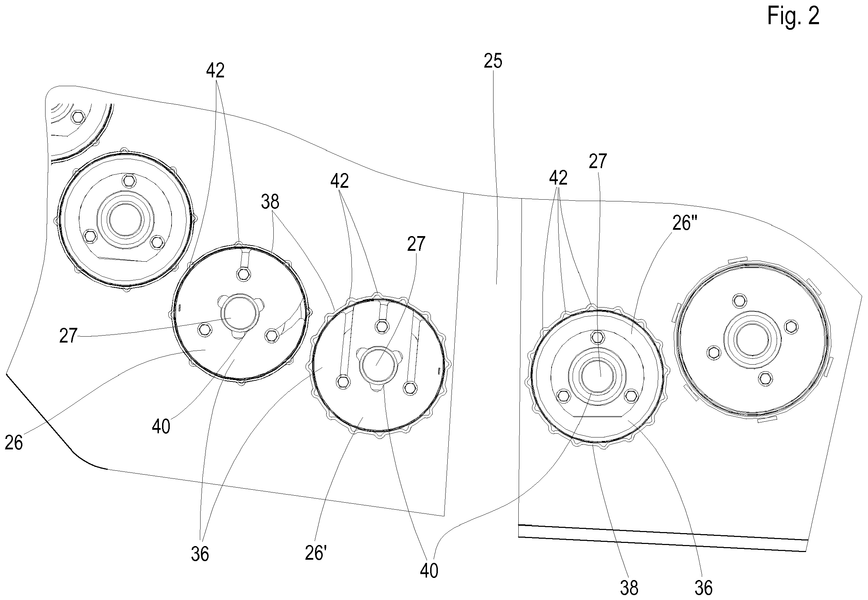

Der Bereich um die auf der Unterseite der Rundballenpresse 10 rückseitig und vorderseitig der Öffnung 25 angeordneten Pressrollen 26', 26" ist in einem vergrößerten Ausschnitt in Figur 2 dargestellt.

Wie in Figur 2 dargestellt ist, umfassen die Pressrollen 26, 26', 26" einen Rollenkörper 36, der von einer Mantelfläche 38 umschlossen wird. Der Rollenkörper 36 ist als zylindrisches Rohrprofil ausgebildet und kann beispielsweise aus einem Blechmaterial in einem Umformverfahren bzw. Walzverfahren geformt sein. Der Rollenkörper 36 weist an seinen Endbereichen Achsnaben 40 auf, die in das Rohrprofil eingepasst sind und der Halterung bzw. Lagerung der Rollachsen 27 dienen.

Jeweils auf den Mantelflächen 38 sind Rippen 42 angeordnet, die durch Erhebungen gebildet werden, die auf bzw. in der Mantelfläche 38 entlang der Rollachsen 27 des Rollenkörpers 36 über im Wesentlichen die gesamte Länge des Rollenkörpers 36 ausgebildet sind. Die Erhebungen können beispielsweise durch ein Blechumformverfahren in das Blechmaterial des Rollenkörpers 36 eingeformt oder auch durch Aufschweißungen von Blechstreifen auf die Mantelfläche 38 aufgebracht werden.

Das in den Figuren 1 und 2 dargestellte Ausführungsbeispiel zeigt eine Pressrolle 26 mit beispielhaft 8 auf dem Umfang des diesbezüglichen Rollenkörpers 36 gleichmäßig verteilten Rippen 42. Die auf der Unterseite der Rundballenpresse 10 rückseitig und vorderseitig der Öffnung 25 angeordneten Pressrollen 26', 26" sind hingegen mit einer höheren Anzahl von Rippen 42 versehen, hier beispielhaft mit 16 Rippen 42. Die höhere Anzahl von Rippen 42 an den Pressrollen 26' und 26" stellt eine zu den übrigen Pressrollen 26 verschiedene Beschaffenheit, insbesondere der Oberflächenbeschaffenheit der Pressrollen 26', 26" dar, wodurch eine stärkere Eingriffswirkung auf einen zu pressenden Ballen geschaffen wird, d.h. die Pressrollen 26' und 26" wirken mit größerer Aggressivität auf die Umfangsfläche eines zu pressenden Ballens ein, als die übrigen Pressrollen 26. Die stärkere Eingriffswirkung kommt zudem verstärkt zum Tragen, wenn der fertig gepresste Ballen entladen werden soll und sich das Gewicht des Ballens bei sich öffnendem hinteren Gehäuseteil 24 zunehmend auf die Pressrollen 26' und 26" verlagert. Wie in Figur 1 zu sehen ist, müssen nicht alle Pressrollen 26 mit 8 Rippen 42 bestückt sein, insbesondere nicht diejenigen, die neben einer Ballenmitnahme- und Formgebungs- bzw. Pressfunktion auch noch weitere Funktionen innehaben und beispielsweise in einer Einführöffnung 35 für Garn- oder Netzmaterial oder in einem Einführkanal 19 für Erntegut angeordnet sind. Diese können aus technischen Gründen auch mit weniger Rippen 42 bestückt sein. Dies ist jedoch nicht zwingend der Fall, so dass in anderen Ausführungsformen durchaus auch alle übrigen Pressrollen 26 mit 8 Rippen besetzt sind. Ferner sei darauf hingewiesen, dass die Auswahl von 8 Rippen 42 an den Pressrollen 26 und 16 Rippen 42 an den Pressrollen 26', 26" hier als Beispiel gewählt wurde. Es sind aber insgesamt auch mehr oder weniger Rippen 42 anordbar.

Die Pressrollen 26, 26', 26" sind in bekannter Weise über einen Kettentrieb oder Riementrieb (nicht gezeigt) angetrieben, wobei die Pressrollen 26', 26" zusätzlich mit einer Ketten- bzw. Riementriebschaltung versehen sind, die eine Drehzahlerhöhung der Pressrollen 26', 26" gegenüber den übrigen Pressrollen 26 ermöglicht. Sobald sich die Auslassklappe, also der hintere Gehäuseteil 24 zum Auswerfen des Ballens, öffnet, wird die Drehzahl der Pressrollen 26', 26" erhöht und dadurch eine abnehmende Eingriffswirkung der übrigen Pressrollen 26 kompensiert. Die Anordnung für eine Steuerung einer Drehzahlerhöhung kann beispielsweise einen Sensor umfassen, der ein Öffnungssignal an eine Steuereinrichtung liefert, welche wiederum eine Stelleinheit zum Schalten der Ketten- bzw. Riementriebschaltung aktiviert. Die Anordnung und Ausbildung einer geeigneten Ketten- bzw. Riementriebschaltung liegt im Bereich des Allgemeinwissens eines Fachmanns für Antriebstechnik für Rundballenpressen und erfordert keine weitere Erörterung im Detail.

## Patentansprüche

1. Landwirtschaftliche Rundballenpresse (10) mit einer Ballenpresskammer (20) aus mehreren angetriebenen und über einen Umfang der Ballenpresskammer (20) angeordneten Pressrollen (26, 26', 26") durch welche eine rotationserzeugende oder rotationserhaltene Eingriffswirkung auf einen in der Ballenpresskammer (20) befindlichen Rundballen erzeugbar ist, wobei die Ballenpresskammer (20) eine Öffnung (25) aufweist, durch welche der gepresste Rundballen entladen werden kann, und wobei an einer Unterseite der Ballenpresskammer (20) wenigstens eine der unmittelbar rückseitig der Öffnung (25) oder unmittelbar vorderseitig der Öffnung angeordneten Pressrollen (26', 26") mit einer zu den übrigen Pressrollen (26) höheren Drehzahl antreibbar ist, **dadurch gekennzeichnet, dass** bei Beginn eines Entladeprozesses für einen fertig gepressten Rundballen, bei sich öffnendem hinteren Gehäuseteil, die an der Unterseite der Ballenpresskammer unmittelbar rückseitig der Öffnung und/oder unmittelbar vorderseitig der Öffnung angeordnete Pressrolle (26', 26") mit einer höheren Umdrehungszahl betrieben wird.

## Claims

1. Agricultural round baler (10) having a baling chamber (20) comprising a plurality of driven pressing rollers (26, 26', 26") arranged around a circumference of the baling chamber (20), a rotation-generating or rotation-maintaining engagement action on a round bale located in the baling chamber (20) being able to be generated by way of said pressing rollers (26, 26', 26"), wherein the baling chamber (20) has an opening (25) through which the pressed round bale can be unloaded, and wherein, on an underside of the baling chamber (20), at least one of the pressing rollers (26', 26") arranged immediately behind the opening (25) or immediately in front of the opening is drivable at a higher rotational speed than the other pressing rollers (26), **characterized in that**, at the start of an unloading process for a fully pressed round bale, with a rear housing part opening, the pressing roller (26', 26") arranged on the underside of the baling chamber immediately behind the opening and/or immediately in front of the opening is driven at a higher rotational speed.

## Revendications

1. Presse agricole à balles rondes (10), pourvue d'une chambre de pressage de balles (20), composée de plusieurs rouleaux de pressage (26, 26', 26") placés sur la périphérie de la chambre de pressage de balles (20), par lesquels peut être généré un effet d'engagement créant une rotation ou maintenant une rotation sur une balle ronde se trouvant dans la chambre de pressage de balles (20), la chambre de pressage de balles (20) comportant une ouverture (25), à travers laquelle la balle ronde pressée peut être déchargée et sur une face inférieure de la chambre de pressage de balles (20), au moins l'un des rouleaux de pressage (26', 26") placés directement sur l'arrière de l'ouverture (25) ou directement sur l'avant de l'ouverture pouvant être entraîné à un régime supérieur à celui des autres rouleaux de pressage (26), **caractérisée en ce qu'**au début d'un processus de déchargement d'une balle ronde pressée finie, lorsqu'une partie arrière de carter s'ouvre, le rouleau de pressage (26', 26") placé sur la face inférieure de la chambre de pressage de balles, directement sur l'arrière de l'ouverture et/ou directement sur l'avant de l'ouverture fonctionne avec un nombre de tours plus élevé.
